# EUROPÄISCHE PATENTSCHRIFT

(11) **EP 4 422 889 B1**
(45) Veröffentlichungstag und Bekanntmachung des Hinweises auf die Patenterteilung: **01.10.2025**
(21) Anmeldenummer: 22801560.8
(22) Anmeldetag: 27.10.2022
(51) Int. Cl.: B60D 1/36, B60D 1/62, G06V 10/145, G06V 20/58

(54) **VORRICHTUNG ZUM ORTEN EINES AN EINEM ANHÄNGERFAHRZEUG ANGEORDNETEN KUPPLUNGSMITTELS**
DEVICE FOR LOCATING A COUPLING MEANS ARRANGED ON A TRAILER VEHICLE
DISPOSITIF DE LOCALISATION D'UN MOYEN DE COUPLAGE DISPOSÉ SUR UN VÉHICULE TRACTÉ

(30) Priorität: 27.10.2021 DE 102021005348
(43) Veröffentlichungstag der Anmeldung: 04.09.2024
(73) Patentinhaber: JOST-Werke Deutschland GmbH, 63263 Neu-Isenburg (DE)
(72) Erfinder: MÜLLER, Mark, 60486 Frankfurt (DE)
(74) Vertreter: Straubel, Dirk
(86) Internationale Anmeldenummer: PCT/IB2022/060339
(87) Internationale Veröffentlichungsnummer: WO 2023/073607

(56) Entgegenhaltungen:
- WO-A1-2019/231474
- DE-A1- 102004 029 130
- US-A1- 2015 291 097
- LUO R C ET AL: "TRANSLATION AND SCALE INVARIANT LANDMARK RECOGNITION USING RECEPTIVE FIELD NEURAL NETWORKS", PROCEEDINGS OF THE IEEE/RSJ INTERNATIONAL CONFERENCE ON INTELLIGENT ROBOTS AND SYSTEMS. RALEIGH, NC., JULY 7 - 10, 1992; [PROCEEDINGS OF THE IEEE/RSJ INTERNATIONAL CONFERENCE ON INTELLIGENT ROBOTS AND SYSTEMS], NEW YORK, IEEE, US, vol. 1, 7 July 1992 (1992-07-07), pages 527 - 533, XP000339050, ISBN: 978-0-7803-0738-4, DOI: 10.1109/IROS.1992.587385

## Beschreibung

Die Erfindung betrifft eine Vorrichtung zum Orten eines an einem Anhängerfahrzeug angeordneten Kupplungsmittels vor dem Kupplungsvorgang entsprechend den Merkmalen des Oberbegriffs von Anspruch 1.

An einem Zugfahrzeug ist üblicherweise eine zugfahrzeugseitige Kupplung angebracht und auch das Anhängerfahrzeug verfügt über ein mit der Kupplung kompatibles Kupplungsmittel, über das eine mechanische Verbindung zu der zugfahrzeugseitigen Kupplung herstellbar ist. In angekuppeltem Zustand sind das Anhängerfahrzeug und das Zugfahrzeug drehbeweglich aber lösbar miteinander verbunden. Das Anhängerfahrzeug kann insbesondere ein Sattelauflieger mit einem Kupplungsmittel in Form eines daran befestigten Königszapfens sein. Das Zugfahrzeug weist in diesem Fall eine Sattelkupplung auf, in welche der Königszapfen eingefahren und anschließend verriegelt wird.

Problematisch ist häufig der Kupplungsvorgang, bei dem sich das Zugfahrzeug in rückwärtiger Fahrt an das stehende Anhängerfahrzeug annähert und die zugfahrzeugseitige Kupplung präzise das Kupplungsmittel des Anhängerfahrzeugs aufnehmen muss. Besonders gefährlich ist ein augenscheinlich korrekt in die Kupplung eingefahrenes Kupplungsmittel, welches jedoch nicht vollständig in der Kupplung verriegelt ist. In diesem Fall besteht das Risiko, dass sich das Anhängerfahrzeug bei schneller Fahrt unkontrolliert vom Zugfahrzeug löst und verselbständigt. Der Fahrer des Zugfahrzeugs ist daher verpflichtet, sich vor Fahrtantritt über den korrekten Kupplungszustand zu vergewissern, was insofern schwierig ist, als dass insbesondere bei Sattelkupplungen ein Verriegelungsmechanismus der Kupplung kaum einsehbar ist und der Fahrer unter den Sattelauflieger kriechen muss, um überhaupt den Verriegelungszustand abschätzen zu können. Im Stand der Technik gab es daher bereits Bemühungen, ein korrekt in die Kupplung eingefahrenes und darin verriegeltes Kupplungsmittel anzuzeigen oder von vornherein die korrekte Annäherung des Zugfahrzeugs mit technischen Hilfsmitteln zu präzisieren.

Die WO 2016/186841 A1 schlägt vor, mit Hilfe von zwei Sensoren die Position des Königszapfens und des Verriegelungsmechanismus zu überwachen und im Falle einer korrekten Verriegelung den Bereich unter einer Kupplungsplatte zu illuminieren, so dass dem Fahrer die Sichtkontrolle vereinfacht und keine Taschenleuchte benötigt wird. Es hat sich jedoch als nachteilig herausgestellt, dass es im Falle einer fehlerhaften Ausrichtung von zugfahrzeugseitiger Kupplung und anhängerseitigem Kupplungsmittel bereits vor dem eigentlichen Kupplungsvorgang zu erheblichen Beschädigungen sowohl der Kupplung oder des Zugfahrzeugs als auch des Kupplungsmittels und des Anhängerfahrzeugs kommen kann.

Die DD 221 693 A1 offenbart eine Einrichtung zur Orientierung von Fahrzeugen beim Lenken im Nahbereich gegenüber weitestgehend außer Sicht befindlichen Bezugsobjekten. Zumindest in einer Ausgestaltung ist vorgesehen, einen lichtoptischen Sender und einen lichtoptischen Empfänger als Funktionseinheit gemeinsam an einem Fahrzeug anzuordnen. Zur Umlenkung des Lichtstrahls soll ortsfest zu der Zuggabel des Anhängers ein Hohlspiegel angeordnet sein. In der Praxis hat sich jedoch herausgestellt, dass bereits bei einer geringfügigen Dejustierung des Hohlspiegels keine brauchbare Funktion der bekannten Einrichtung gegeben ist.

In der DE 199 50 808 A1 ist eine Vorrichtung und ein Verfahren zum Verbinden eines Anhängers mit einem Zugfahrzeug beschrieben. In einem Heckbereich des Zugfahrzeugs können in räumlicher Nähe zu dem Kupplungsmaul unter anderem ein Sender und drei seitlich zueinander versetzte Empfänger angeordnet sein. Das Messsignal soll von einem reflektierenden Element reflektiert und zum Sender zurückgeworfen werden, wo auch der oder die Empfänger angeordnet ist/sind. Als möglicher Sender wird ein UltraschallSender oder andere Arten von Sendersignalen wie Funksignale oder Laserstrahlen genannt. Eine Annäherung zum Ankuppeln von Zugfahrzeug und Anhängerfahrzeug auf Basis der in der älteren Vorrichtung verwendeten Sendersignale hat bisher jedoch nicht in zufriedenstellender Weise funktioniert. Auch das Dokument WO 2019/231474 A1 offenbart eine gattungsgemäße Vorrichtung.

Folglich lag der Erfindung die Aufgabe zugrunde, eine Vorrichtung bereitzustellen, mit deren Hilfe eine präzisere Annäherung der zugfahrzeugseitigen Kupplung an das Kupplungsmittel des Anhängerfahrzeugs möglich ist. Eine weitere Teilaufgabe bestand darin, ein entsprechendes Annäherungsverfahren des Zugfahrzeugs an ein Anhängerfahrzeug zu entwickeln.

Die Aufgabe wird mit den Merkmalen des Anspruchs 1 gelöst. Während der Annäherung des Zugfahrzeugs an das Anhängerfahrzeug und noch vor einer Kontaktierung eines Kupplungsmittels des Anhängers wird ein an der zugfahrzeugseitigen Kupplung angebrachter Lichtgeber in Form einer Stroboskopleuchte aktiviert. Das Kupplungsmittel des Anhängerfahrzeugs wird dadurch gefunden, dass ein ebenfalls auf dem Zugfahrzeug angeordneter Lichtempfänger von dem Kupplungsmittel reflektiertes Licht der Stroboskopleuchte erfasst.

Bei der Stroboskopleuchte handelt es sich um ein Blitzgerät, das Lichtblitze in vorgegebenen, zeitlichen Abständen abgibt. Hierdurch erscheint insbesondere bei verhältnismäßig dunklen Umgebungsbedingungen eine Bewegung abgehackt als eine Abfolge von stehenden Bildern. Aufgrund dieses Effekts kann eine Positionsbestimmung des Kupplungsmittels mittels der Stroboskopleuchte als Lichtquelle besonders exakt durchgeführt werden. Die abgegebenen Lichtblitze weisen insbesondere eine konstante Blitzfrequenz auf. Es ist jedoch auch möglich, eine Gruppe von Lichtblitzen einer ersten Frequenz zu generieren, der sich eine oder weitere Gruppen mit jeweils einer anderen Frequenz anschließt/anschließen. Vorzugsweise generiert die Stroboskopleuchte eine Blitzfrequenz von 1 Hz bis 1.000 Hz, besonders bevorzugt 5 Hz bis 100 Hz, ganz besonders bevorzugt 10 Hz bis 50 Hz.

Die Einbauposition der Stroboskopleuchte an der zugfahrzeugseitigen Kupplung hat den Vorteil, dass das von der Stroboskopleuchte emittierte Licht möglichst am Heck des Zugfahrzeugs abgestrahlt wird und nicht durch die zugfahrzeugseitige Kupplung selbst oder andere Anbauteile verdeckt ist. Die räumliche Nähe der Stroboskopleuchte zu der zugfahrzeugseitigen Kupplung ermöglicht auch eine möglichst lange Erfassung des reflektierten Lichts, da zum Beispiel bei einer Sattelkupplung die Stroboskopleuchte erst zu einem späten Zeitpunkt von dem Königszapfen überfahren und dadurch das reflektierte Licht länger sichtbar bleibt als bei einer Anbringung zum Beispiel am Heck des Zugfahrzeugs.

Insbesondere bei einem Sattelauflieger ist das Kupplungsmittel in Form eines Königszapfens auf der Unterseite eines Aufliegerbodens angeordnet, von dem Sattelauflieger überdeckt und dadurch weitgehend abgeschattet. Der Königszapfen selbst verfügt typischerweise über eine metallisch glänzende Oberfläche, die besonders gut das von der Stroboskopleuchte emittierte Licht reflektiert. Dieses reflektierte Licht wird von dem Lichtempfänger aufgenommen und dadurch der Kupplungsmittel des Anhängerfahrzeug erkannt.

Vorzugsweise ist die Stroboskopleuchte derart ausgerichtet, dass das emittierte Licht bezüglich der zugfahrzeugseitigen Kupplung in der rückwärtigen Richtung abgestrahlt wird. Hierdurch ergibt sich für den Lichtempfänger eine besonders hohe Ausbeute an reflektiertem Licht und eine besonders treffsichere Identifizierung des Kupplungsmittels. Unter dem Begriff "rückwärtiger Richtung" wird ein Fächer mit einem Öffnungswinkel von 180° entgegen der Fahrtrichtung verstanden. Dieser Fächer kann auch einen kleineren Öffnungswinkel von beispielsweise maximal 90° oder besonders bevorzugt maximal 60° aufweisen. Idealerweise reduziert sich der Fächer auf einen linienartigen Lichtaustritt in der Fahrzeuglängsachse des Zugfahrzeugs.

Die Stroboskopleuchte kann neben sichtbarem Licht auch Licht im infraroten Spektrum emittieren oder ein Laser sein. Als Licht eines definierten Spektrums ist ein IR-Licht in einem Frequenzbereich von 780 nm bis 1000 nm, besonders bevorzugt 800 nm bis 900 nm, ganz besonders bevorzugt von 820 nm bis 880 nm geeignet. Der Laser kann insbesondere ein in einem Frequenzbereich von 905 nm bis 1000 nm arbeitender Short-Range-Laser sein. Es kann ebenso weißes Licht, insbesondere aus einer Halogen-Leuchte, mit einem Lichtstrom von mindestens 1550 Im und einer Farbtemperatur von mindestens 3200 k eingesetzt sein.

Gemäß einer besonders günstigen Ausführungsform ist die zugfahrzeugseitige Kupplung eine Sattelkupplung, wobei die Stroboskopleuchte an einer Kupplungsplatte, an einem von zwei Lagerböcken oder an einer Montageplatte der Sattelkupplung befestigt ist.

Es kann auch vorgesehen sein, dass die Stroboskopleuchte schwenkbeweglich an der Kupplungsplatte befestigt ist. Die Stroboskopleuchte ist dann vorzugsweise an einem schwenkbeweglich gelagerten Halter befestigt. Die schwenkbewegliche Anbringung der Stroboskopleuchte ermöglicht das Ausnutzen einer Montageposition, die lediglich vor dem Ankuppeln des Anhängerfahrzeugs nutzbar ist aber während und nach dem Ankuppeln im Einwirkungsbereich des Anhängerfahrzeugs liegt, so dass eine dort fest angebauter Stroboskopleuchte durch das Anhängerfahrzeug zerstört werden könnte. Mithilfe des schwenkbeweglich gelagerten Halters vollzieht die Stroboskopleuchte eine Bewegung aus dem Einwirkungsbereich des Anhängerfahrzeugs heraus. Dabei kann die Schwenkbewegung des Halters nebst Stroboskopleuchte von dem Anhängerfahrzeug ausgelöst sein, indem beispielsweise Teile des Anhängerfahrzeugs wie zum Beispiel die Aufliegerplatte gegen den schwenkbeweglich gelagerten Halter stoßen und dadurch eine Lageveränderung bewirken. Eine schwenkbewegliche Anbringung der Stroboskopleuchte ermöglicht eine weitgehend freie Wahl der Montageposition im Bereich der Fahrzeuglängsachse des Zugfahrzeugs, wodurch das Kupplungsmittel des Anhängerfahrzeugs besonders zentral angeleuchtet wird und das reflektierte Licht von dem Lichtempfänger in räumlicher Nähe zu der Stroboskopleuchte erkennbar ist.

Sofern die Stroboskopleuchte oder dessen schwenkbeglich gelagerter Halter gegenüber der Kupplungsplatte federvorgespannt sind, nimmt die Stroboskopleuchte nach dem Abkuppeln des Anhängerfahrzeugs ihre ursprüngliche, aufgerichtete Lage ein und ist bereit für einen erneuten Kupplungsvorgang.

Vorteilhafterweise ist der Lichtempfänger an der zugfahrzeugseitigen Kupplung angeordnet und besonders bevorzugt auch daran befestigt. Hierdurch befinden sich Lichtempfänger und Stroboskopleuchte in räumlicher Näher zueinander, wodurch der erkennbare Bereich eines sich annähernden Kupplungsmittels maximiert ist, da der Lichtempfänger und die Stroboskopleuchte beispielsweise von einem Königszapfen zeitgleich überfahren werden und von diesem Zeitpunkt an kein reflektiertes Licht mehr von dem Lichtempfänger aufgenommen werden kann.

Sinnvollerweise ist der Lichtempfänger derart ausgerichtet, dass das aus der rückwärtigen Richtung reflektierte Licht erfasst wird. Somit sind Lichtempfänger und Stroboskopleuchte in gleicher Wirkrichtung ausgerichtet.

Es hat sich als besonders zweckmäßig herausgestellt, wenn der Lichtempfänger eine Kamera oder eine Fotozelle ist.

Vorzugsweise sind die Stroboskopleuchte und der Lichtempfänger in eine gemeinsame Baueinheit integriert. Eine gemeinsame Baueinheit kann insbesondere ein gemeinsames Gehäuse darstellen. In jedem Fall sind bei dieser Ausführungsform in betriebsbereiter Position die Stroboskopleuchte und der Lichtempfänger an einem gemeinsamen Trägerelement montiert, welches wiederum an der zugfahrzeugseitigen Kupplung befestigt ist.

Dabei ist es besonders günstig, wenn die gemeinsame Baueinheit mehrere Stroboskopleuchten aufweist, die vorzugsweise in Umfangsrichtung versetzt um den Lichtempfänger angeordnet sind. Vorteilhafterweise sind vier Stroboskopleuchten vorhanden, die in Umfangsrichtung gleichmäßig verteilt um die Stroboskopleuchte angeordnet sind. Hierdurch wird ein besonders homogenes Licht rings um den Lichtempfänger emittiert und ein verhältnismäßig starkes reflektiertes Licht erzeugt.

Die Stroboskopleuchte und der Lichtempfänger können in Einbaulage auf gegenüberliegenden Seiten, symmetrisch zur Fahrzeuglängsachse der zugfahrzeugseitigen Kupplung angeordnet sein. In diesem Fall sind die Stroboskopleuchte und der Lichtempfänger nicht in einer gemeinsamen Baueinheit integriert, sondern an unterschiedlichen Montagepositionen verbaut. Die seitliche Abweichung von der Fahrzeuglängsachse sollte bei der Stroboskopleuchte und dem Lichtempfänger gleich sein, damit das unter einem Einfallswinkel auf das Kupplungsmittel des Anhängerfahrzeugs auftreffende emittierte Licht der Stroboskopleuchte ungefähr mit demselben Reflexionswinkel als reflektiertes Licht abstrahlt und von dem Lichtempfänger erfassbar ist.

Prinzipiell könnte, sofern sichtbares Licht von der Stroboskopleuchte emittiert wird und der Lichtempfänger eine Kamera ist, die Vorrichtung mit einer im Fahrerhaus angeordneten Anzeigevorrichtung zusammenwirken. Günstigerweise ist jedoch zusätzlich eine elektronische Auswerteeinheit vorhanden, mit welcher aus einer von dem Lichtempfänger empfangenen Mittenreflexionswolke des reflektierten Lichtes ein Vorhandensein des Kupplungsmittels ermittelt ist. Die Mittenreflexionswolke bildet alle reflektierenden Lichtpunkte auf der Oberfläche des Kupplungsmittels am Anhängerfahrzeug ab. Somit stellt der von dem Lichtempfänger erfasste hellste Punkt auch die Position des Kupplungsmittels dar.

Die elektronische Auswerteeinheit kann insbesondere eine Höhe der Mittenreflexionswolke ermitteln. Hieraus resultiert der Vorteil, dass mittels der elektronischen Auswerteeinheit aus der Höhe der Mittenreflexionswolke die Entfernung zu dem Kupplungsmittel berechenbar ist.

Sinnvollerweise erfolgt mittels der elektronischen Auswerteeinheit eine Konturauswertung beidseitig der Mittenreflexionswolke und eine Verifizierung des Kupplungsmittels. Hierdurch ist es möglich, die Art des am Anhängerfahrzeug verbauten Kupplungsmittels zu erkennen und dessen bauliche Beschaffenheit. So kann beispielsweise erkannt werden, ob an einem Sattelauflieger ein Königszapfen mit einem Durchmesser von 2,5', 3,5' oder 5' verbaut ist. Diese Information kann wiederum dazu verwendet werden, in der Auswerteeinheit eine Kompatibilitätsprüfung durchzuführen und der Bedienperson anzuzeigen, ob das Anhängerfahrzeug an das Zugfahrzeug gekuppelt werden kann.

Zum besseren Verständnis wird die Erfindung nachfolgend anhand von 12 Figuren näher erläutert. Es zeigen die
- **Fig. 1:**: eine Seitenansicht auf ein Zugfahrzeug mit Stroboskopleuchte und Lichtempfänger beabstandet zu einem Anhängerfahrzeug vor dem Kupplungsvorgang;
- **Fig. 2:**: eine perspektivische Ansicht auf eine gemeinsame Baueinheit mit mehreren, um einen Lichtempfänger angeordneten Stroboskopleuchten;
- **Fig. 3:**: eine Hinteransicht auf eine Sattelkupplung mit mehreren möglichen Anbaupositionen für eine Stroboskopleuchte;
- **Fig. 4:**: einen vergrößerten Ausschnitt eines Querschnitts durch die Anbaupositionen für eine Stroboskopleuchte gemäß Pos 1.1.1 und Pos 1.1.2 in Fig. 3;
- **Fig. 5:**: einen vergrößerten Ausschnitt eines Querschnitts durch die Anbaupositionen für eine Stroboskopleuchte gemäß Pos 1.2 und Pos 2.3.4 in Fig. 3;
- **Fig. 6:**: einen vergrößerten Ausschnitt eines Querschnitts durch die Anbaupositionen für eine Stroboskopleuchte gemäß Pos 2 in Fig. 3;
- **Fig. 7:**: einen vergrößerten Ausschnitt einer perspektivischen Draufsicht auf die Anbaupositionen für eine Stroboskopleuchte gemäß Pos 2.1.1 und Pos 2.2 in Fig. 3;
- **Fig. 8:**: einen vergrößerten Ausschnitt einer perspektivischen Draufsicht auf die Anbaupositionen für eine Stroboskopleuchte gemäß Pos 2.1.2 in Fig. 3;
- **Fig. 9:**: einen vergrößerten Ausschnitt einer perspektivischen Draufsicht auf die Anbaupositionen für eine Stroboskopleuchte gemäß Pos 2.3.1 in Fig. 3;
- **Fig. 10:**: einen vergrößerten Ausschnitt einer perspektivischen Unteransicht auf die Anbaupositionen für eine Stroboskopleuchte gemäß Pos 2.3.2 in Fig. 3;
- **Fig. 11:**: einen vergrößerten Ausschnitt einer perspektivischen Unteransicht auf die Anbaupositionen für eine Stroboskopleuchte gemäß Pos 2.3.3 in Fig. 3 und
- **Fig. 12:**: eine Vorderansicht auf einen von der Stroboskopleuchte angestrahlten Königszapfen mit Mittenreflexionswolke.

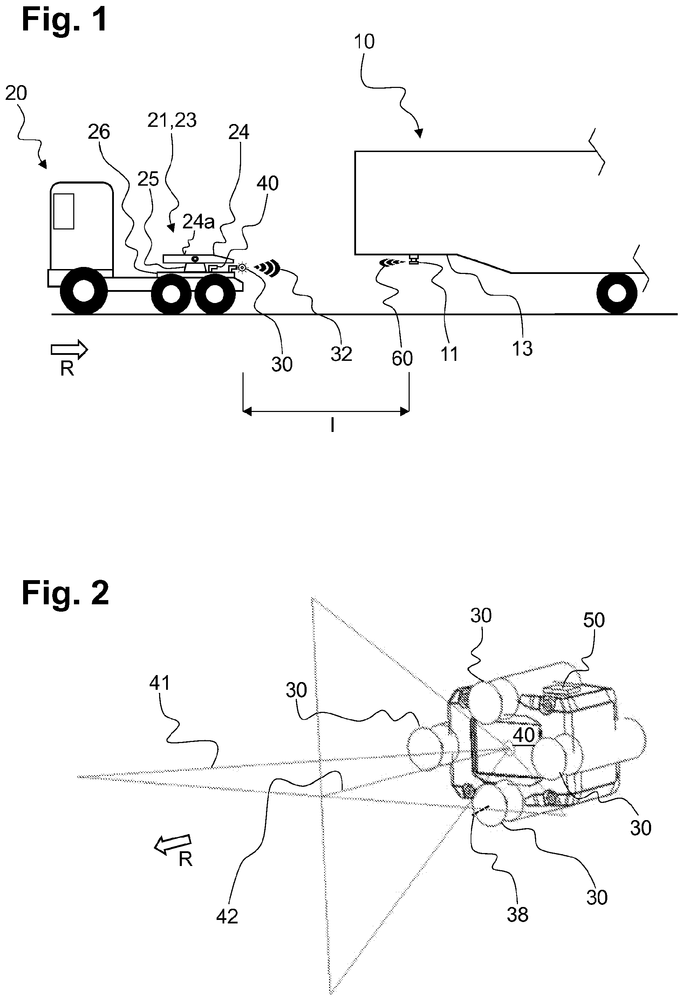

Die Fig. 1 zeigt eine Seitenansicht auf ein Zugfahrzeug 20 beabstandet zu einem Anhängerfahrzeug 10 in Form eines Sattelaufliegers vor dem Kupplungsvorgang. Das Anhängerfahrzeug 10 weist als Kupplungsmittel 11 einen Königszapfen 12 auf, der gegenüber einer an der Unterseite des Anhängerfahrzeugs 10 befestigten Aufliegerplatte 13 des Anhängerfahrzeugs 10 nach unter vorsteht. Das Zugfahrzeug 20 nähert sich für den Kupplungsvorgang, bei dem eine mechanische Verbindung mit dem Anhängerfahrzeug 10 hergestellt wird, in rückwärtiger Richtung R an das Anhängerfahrzeug 10 solange an, bis der Königszapfen 12 in eine zugfahrzeugseitige Kupplung 21 gelangt und dort verriegelt wird.

Die zugfahrzeugseitige Kupplung 21 ist eine Sattelkupplung 23, die eine Kupplungsplatte 24 umfasst, zwei seitlich an der Kupplungsplatte 24 angreifende Lagerböcke 25, über welche die Kupplungsplatte 24 an dem Zugfahrzeug 20 befestigt ist, sowie eine Montageplatte 26, welche an einem nicht gezeigten Fahrzeugrahmen befestigt ist und die beiden Lagerböcke 25 trägt. Nach Beendigung des Kupplungsvorganges liegt die Aufliegerplatte 13 auf einer Oberseite 24a der Kupplungsplatte 24 auf und stützt sich darüber an dem Zugfahrzeug 20 ab.

An der zugfahrzeugseitigen Kupplung 21 ist sowohl ein Lichtgeber 30 in Form einer Stroboskopleuchte 30 als auch ein Lichtempfänger 40 angeordnet, die beide in rückwärtiger Richtung R ausgerichtet sind. Indem das Kupplungsmittel 11 des Anhängerfahrzeugs 10, insbesondere der Königszapfen 12, mittels eines von der Stroboskopleuchte 30 emittierten Lichts 32 angeblitzt und ein von dem Kupplungsmittel 11 reflektiertes Licht 60 mittels des Lichtempfängers 40, insbesondere einer Kamera oder Fotozelle, aufgenommen wird, ist eine Bestimmung einer Entfernung I des Kupplungsmittels 11 des Anhängerfahrzeugs 10 zu dem Zugfahrzeug 20 möglich.

Wie in dem Ausführungsbeispiel gemäß Fig. 2 dargestellt ist, können die Stroboskopleuchte 30 und der Lichtempfänger 40 in einer gemeinsamen Baueinheit zusammengefasst sein. Die gemeinsame Baueinheit umfasst ein Gehäuse, in oder an dem die Stroboskopleuchte 30 und der Lichtempfänger 40 dauerhaft befestigt sind. In dem gezeigten Ausführungsbeispiel sind vier Stroboskopleuchten 30 vorgesehen, die kranzartig um den Lichtempfänger 40 angeordnet sind.

Der Lichtempfänger 40 weist einen fächerartigen Erfassungsbereich 41 und eine in rückwärtiger Richtung R verlaufende optische Mittelachse 42 auf. Optische Mittelachsen 38 der Stroboskopleuchte(n) 30 verlaufen ebenfalls in rückwärtiger Richtung R und sind achsparallel zu der optischen Mittelachse 42 des Lichtempfängers 40 ausgerichtet.

Darüber hinaus ist in der gemeinsamen Baueinheit von Stroboskopleuchte 30 und Lichtempfänger 40 noch eine elektronische Auswerteeinheit 50 angeordnet, mit deren Hilfe das Kupplungsmittel 11 des Anhängerfahrzeug 10 identifiziert und gegebenenfalls eine Entfernung zu dem Kupplungsmittel 11 berechnet wird. Die Auswerteinheit 50 kann auch getrennt von der Stroboskopleuchte 30 und/oder dem Lichtempfänger 40 an anderer Stelle des Zugfahrzeugs 20, insbesondere an dessen zugfahrzeugseitiger Kupplung 21 angebracht sein.

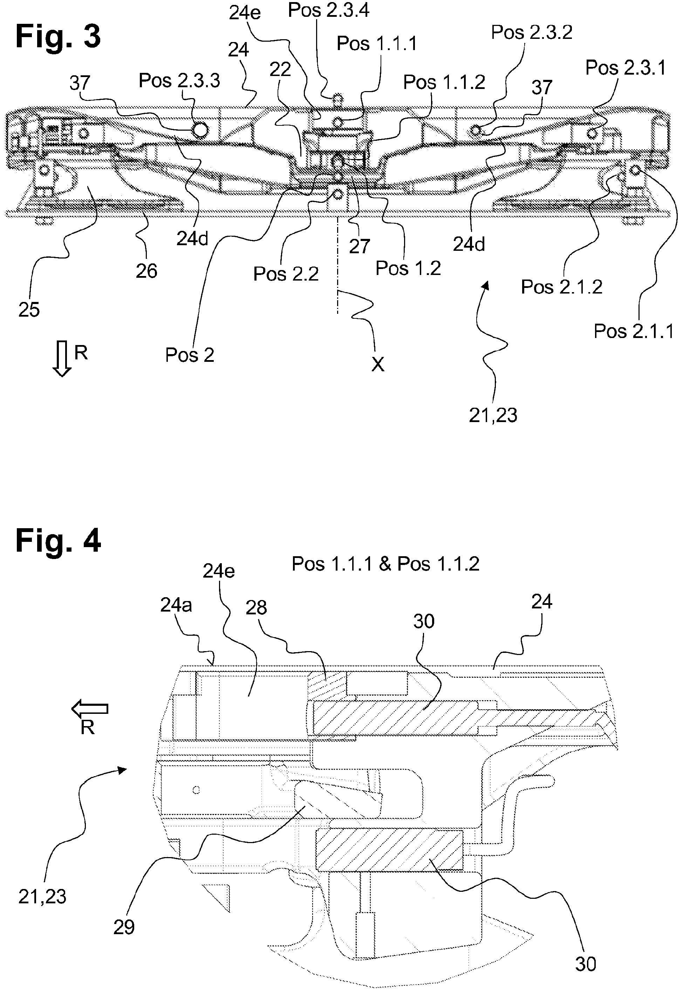

Die Fig. 3 stellt beispielhaft eine Sattelkupplung 23 als zugfahrzeugseitige Kupplung 21 in einer Hinteransicht mit mehreren möglichen Montagepositionen Pos 1.1.1, Pos 1.1.2, Pos 1.2, Pos 2.3.4, Pos 2, Pos 2.1.1, Pos 2.2, Pos 2.1.2, Pos 2.3.1, Pos 2.3.2, Pos 2.3.3 für die mindestens eine Stroboskopleuchte 30 dar, die jeweils mit weiteren Details in den nachfolgenden Fig. 4 bis Fig. 11 erläutert werden. Sofern die Stroboskopleuchte 30 und der Lichtempfänger 40 in einer gemeinsamen Baueinheit integriert sind, kann diese ebenfalls in einer der vorgeschlagenen Montagepositionen angebracht sein.

Die Kupplungsplatte 24 weist zwei daran angeformte, sich in rückwärtiger Richtung R erstreckende Einfahrhörner 24d auf, die eine dazwischen liegende und in rückwärtiger Richtung R konisch aufgeweitete Einfahröffnung 22 seitlich begrenzen. Bei stetiger Annäherung des Zugfahrzeugs 20 gelangt der Königszapfen 12 in die Einfahröffnung 22 und wird darin bis zum Erreichen seiner Endlage in einen Verriegelungsbereich 24e der Kupplungsplatte 24 geführt. Die Einfahrhörner 24d sind ausgehend von der planen Oberseite 24a der Kupplungsplatte 24 mit einer nach unten abfallenden, rampenförmigen Oberseite ausgebildet, auf welcher eine tiefstehende Aufliegerplatte 13 während des Kupplungsvorganges bis in ihre Endgültige Höhenlage gleiten kann.

Die Fig. 4 verdeutlicht in einem vergrößerten Querschnitt die Montagepositionen Pos 1.1.1 und Pos 1.1.2 für die Stroboskopleuchte 30. In der Pos 1.1.1 ist die Stroboskopleuchte 30 in einen Verschleißring 28 eingesetzt, der hierfür mit einer Lichtdurchtrittsöffnung 37 ausgebildet ist. Der Verschleißring 28 umgibt den Verriegelungsbereich 24e hufeisenförmig und ist lediglich in rückwärtiger Richtung R geöffnet, so dass der Königszapfen 12 aus der Einfahröffnung 22 in den Verriegelungsbereich 24e eingefahren werden kann.

Die Stroboskopleuchte 30 ist innerhalb des Verschleißringes 28 zu dem Verriegelungsbereich 24e zurückversetzt angeordnet und zwischen der Stroboskopleuchte 30 und dem Verriegelungsbereich 24e ist die Lichtdurchtrittsöffnung 37 ausgebildet, um bei zunehmendem Verschleiß des Verschleißringes 28 und einem damit einhergehenden Materialverlust ein Anstoßen des Königszapfens 12 insbesondere bei Bremsmanövern gegen die Stroboskopleuchte 30 zu verhindern. Überdies sorgt die im Verschleißring 28 zurückversetzte Anbringung der Stroboskopleuchte 30 zu einer reduzierten Verschmutzung der Stroboskopleuchte 30.

Die Anbringung der Stroboskopleuchte 30 innerhalb des Verschleißringes 28 befindet sich in einer Fahrzeuglängsachse X, so dass ein Königszapfen 12 besonders günstig in rückwärtiger Verlängerung hinter dem Zugfahrzeug 20 erfasst werden kann.

In Fig. 4 ist außerdem eine alternative oder ergänzende Montageposition Pos 1.1.2 für eine Stroboskopleuchte 30 angedeutet, bei welcher die Stroboskopleuchte 30 ebenfalls in der Längsachse X in der Kupplungsplatte 24 verbaut ist, allerdings unter einem Verschlusshaken 29 der Verschlussmechanik. In vertikaler Richtung überlappen der Verschlusshaken 29 und die Stroboskopleuchte 30 in einer geöffneten Stellung des Verschlusshakens 29 zumindest teilweise. Das von der Stroboskopleuchte 30 emittierte Licht 32 strahlt durch und/oder unter der Einfahröffnung 22 der Kupplungsplatte 24 in Richtung des Königszapfens 12.

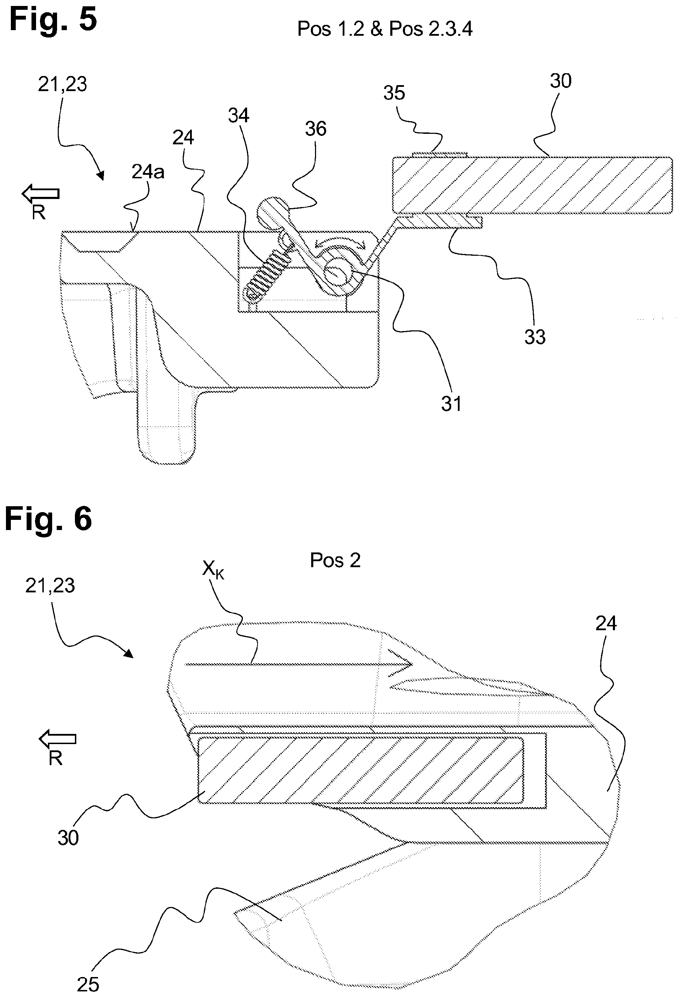

Die Fig. 5 zeigt eine alternative oder ergänzende Montageposition Pos 2.3.4, die prinzipiell auch in der Montageposition 1.2 möglich wäre und sich ebenfalls in der Fahrzeuglängsachse X befindet.

In der Montageposition Pos 2.3.4 ist die Stroboskopleuchte 30 an einem flexiblen Halter 33 befestigt, welcher die Stroboskopleuchte 30 ohne Vorhandensein eines Anhängerfahrzeugs 10 in einer gezeigten Funktionsstellung oberhalb eines Niveaus der Oberseite 24a der Kupplungsplatte 24 hält. Bei Annäherung von Teilen des Anhängerfahrzeugs 10 wie zum Beispiel der Aufliegerplatte 13 oder einem zu hochstehenden Königszapfen 12, wirkt das entsprechende Teil des Anhängerfahrzeugs 10 mit dem flexiblen Halter 33 derart zusammen, dass die Stroboskopleuchte 30 unter das Niveau der Oberseite 24a der Kupplungsplatte 24 geschoben wird.

In dem gezeigten Ausführungsbeispiel gemäß Fig. 5 ist der flexible Halter 33 mittels eines Schwenklagers 31 an der Kupplungsplatte 24 befestigt und von einem Federelement 34 in der angehobenen Funktionsstellung gehalten. In rückwärtiger Richtung R erstreckt sich ein Kontaktarm 36, dessen freies Ende über die Oberseite 24a der Kupplungsplatte 24 ragt. Das Federelement 34 ist zwischen dem Halter 33 und der Kupplungsplatte 24 befestigt und befindet sich in der angehobenen Funktionsstellung in einem zusammengezogenen Zustand. Die Stroboskopleuchte 30 ist starr mit einer winklig zu dem Kontaktarm 34 ausgerichteten Halterbefestigung 35 verbunden, welche die Stroboskopleuchte 30 über dem Niveau der Oberseite 24a der Kupplungsplatte 24 hält, so dass das von der Stroboskopleuchte 30 emittierte Licht 32 über die Kupplungsplatte 24 hinweg in Richtung des Königszapfens 12 strahlt.

Während einer Annäherung des Zugfahrzeugs 20 an das stehende Anhängerfahrzeug 10 überfährt insbesondere die Aufliegerplatte 13 die Sattelkupplung 23, gleitet dabei über die Oberseite 24a der Kupplungsplatte 24 und stößt gegen das freie Ende des Kontaktarms 34. Hierdurch wird der flexible Halter 33, in der Darstellung der Fig. 5 im Uhrzeigersinn, um sein Schwenklager 31 gedreht und taucht unter das Niveau der Oberseite 24a der Kupplungsplatte 24 ab. Hierdurch wird eine Beschädigung der Stroboskopleuchte 30 zuverlässig vermieden.

Während eines Abkuppelns des Anhängerfahrzeugs 10 wandert die Aufliegerplatte 13 in rückwärtiger Richtung R über die Oberseite 24a der Kupplungsplatte 24 und gibt den Kontaktarm 34 frei, welcher daraufhin aufgrund der Vorspannung des Federelementes 34 zurückschwenkt, so dass sich auch die Halterbefestigung 35, in der Darstellung der Fig. 5 entgegen dem Uhrzeigersinn, aufrichtet und die Stroboskopleuchte 30 wieder über dem Niveau der Oberseite 24a der Kupplungsplatte 24 steht.

Die Ausführungsform mit einem flexiblen Halter 33 gemäß Fig. 5 kann prinzipiell auch an einem die beiden Einfahrhörner 24d unter der Einfahröffnung 22 überbrückenden Verbindungssteg 27 entsprechend der Montageposition Pos 1.2 verwirklicht sein. Während des Ankuppelns eines Anhängerfahrzeugs 10 überstreift dessen Königszapfen 12 den Verbindungssteg 27 mit einem geringen vertikalen Abstand, wodurch eine starr darauf angeordnete Stroboskopleuchte 30 zerstört werden würde. Durch die Anbringung der Stroboskopleuchte 30 an einem flexiblen Halter 33 ist es möglich, die günstige Lage der Stroboskopleuchte 30 im Bereich der Fahrzeuglängsachse X zu nutzen und dennoch die Stroboskopleuchte 30 aus dem Einwirkungsbereich des Königszapfens 12 heraus zu schwenken. In dieser Montageposition Pos 1.2 würde der Königszapfen 12 den flexiblen Halter 33 aus der aufrechten Stellung drücken.

Die Ausführungsfigur gemäß Fig. 6 sieht mit der Montageposition Pos 2 eine alternative oder ergänzende starre Anbringung der Stroboskopleuchte 30 innerhalb des Verbindungssteges 27 vor. Die Stroboskopleuchte 30 befindet sich auch in dieser Montageposition Pos 2 in der Fahrzeuglängsachse X und wird in rückwärtiger Richtung R zumindest teilweise von dem Verbindungssteg 27 überragt, so dass die Stroboskopleuchte 30 auch bei einer Fehlkupplung des Anhängerfahrzeugs 10 stets geschützt vor dem Königszapfen 12 und anderen mithin kollidierenden Teilen des Anhängerfahrzeugs 10 untergebracht ist. Der in die Kupplungsplatte 24 einfahrende Königszapfen 12 streicht in Einfahrrichtung X_{K} über den Verbindungssteg 27 hinweg.

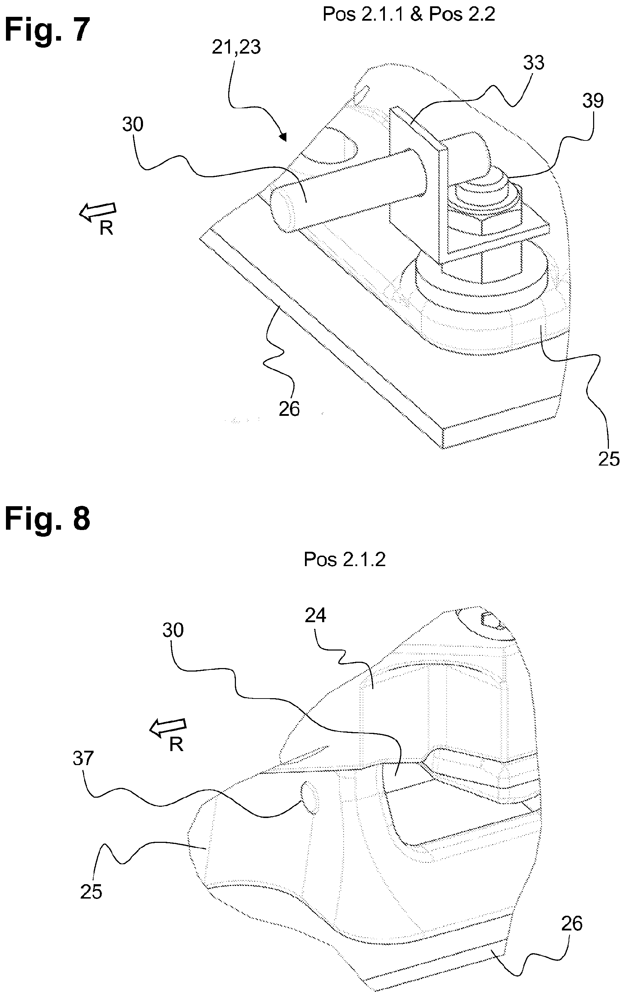

Die Fig. 7 stellt eine alternative oder ergänzende Montageposition Pos 2.1.1 dar, die prinzipiell auch in der Montageposition Pos 2.2 eingesetzt sein kann. In beiden Montagepositionen Pos 2.1.1 und Pos 2.2 ist die Stroboskopleuchte 30 mittels eines starren Halters 33 mittelbar (Pos 2.1.1) oder unmittelbar an der Montageplatte 26 befestigt. Der starre Halter 33 ist als Winkel mit einem horizontalen Schenkel und einem aufstehenden Schenkel ausgebildet, wobei der horizontale Schenkel von einer Befestigungsschraube 39 durchsetzt ist und der vertikale Schenkel die Stroboskopleuchte 30 trägt. In der Darstellung der Pos 2.1.1 gemäß Fig. 7 ist mit der Befestigungsschraube 39 auch einer der Lagerböcke 25 an der Montageplatte 26 festgesetzt. Zwangläufig ist diese Anbringung der Stroboskopleuchte 30 seitlich versetzt zu der Fahrzeuglängsachse X angeordnet.

Sofern der Halter 30 zusammen mit der Stroboskopleuchte 30 unmittelbar auf der Montageplatte 26 befestigt ist, kann bevorzugt auch eine Ausrichtung in der Fahrzeuglängsachse X gemäß Pos 2.2 vorgesehen sein. In dieser Montageposition Pos 2.2 ist in vertikaler Richtung ausreichend freier Bauraum vorhanden, so dass ein beim Ankuppeln in die Kupplungsplatte 24 eintretender Königszapfen 12 des Anhängerfahrzeugs 10 über den in der Fahrzeuglängsachse X montierten Halter 30 nebst Stroboskopleuchte 30 hinwegfährt.

In der Fig. 8 ist eine ergänzende oder alternative Montageposition Pos 2.1.2 verdeutlicht, in welcher die Stroboskopleuchte 30 starr in einen der Lagerböcke 25 integriert ist. Der Lagerbock 25 weist hierfür eine in rückwärtiger Richtung R ausgeformte Lichtdurchtrittsöffnung 37 auf, durch welche von der Stroboskopleuchte 30 emittiertes Licht 32 hindurchtreten kann. Die Stroboskopleuchte 30 befindet sich auf einer der Fahrzeuglängsachse X zugewandten Innenseite des Lagerbockes 25 und ist dadurch besonders gut vor Beschädigungen und äußeren Einflüssen geschützt untergebracht.

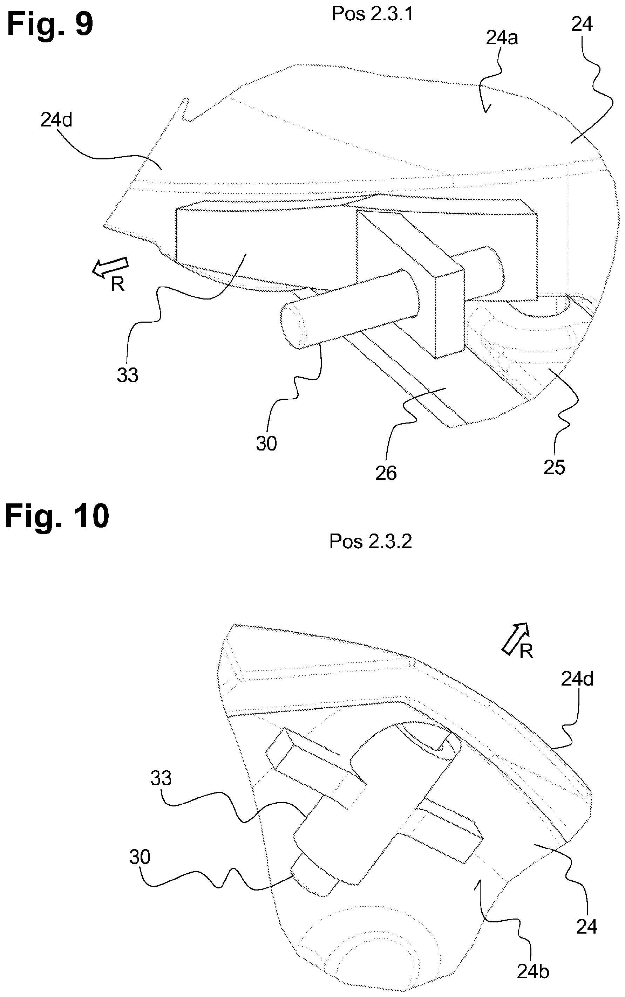

Die Fig. 9 zeigt eine ergänzende oder alternative Montageposition Pos 2.3.1, bei welcher ein starrer Halter 33 zusammen mit der Stroboskopleuchte 30 seitlich an der Kupplungsplatte 24 befestigt ist. Der Halter 33 und die Stroboskopleuchte 30 sind dabei unter einem vertikalen Niveau der Oberseite 24a der Kupplungsplatte 24 und der Einfahrhörner 24d angeordnet. Besonders bevorzugt ist eine Anbringung des Halters 33 und der Stroboskopleuchte 30 seitlich neben den Einfahrhörnern 24d, da von dort das von der Stroboskopleuchte 30 emittierte Licht 32 in rückwärtiger Richtung R hindernisfrei auf das Anhängerfahrzeug 10 trifft.

Die Fig. 10 stellt eine ergänzende oder alternative Montageposition Pos 2.3.2 dar, in welcher die Stroboskopleuchte 30 mittels eines starren Halters 33 auf der Unterseite 24b der Kupplungsplatte 24, insbesondere unter einem der Einfahrhörner 24d, befestigt ist. Das von der Stroboskopleuchte 30 emittierte Licht 32 tritt aus einer fluchtend mit der Stroboskopleuchte 30 in der Kupplungsplatte 24, insbesondere in dem jeweiligen Einfahrhorn 24d, eingebrachten Lichtdurchtrittsöffnung 37 in rückwärtiger Richtung R aus. Aufgrund der perspektivischen Unteransicht der Fig. 10 ist die in der nach unten abfallenden, rampenförmigen Oberseite des Einfahrhorns 24d ausgebildete Lichtdurchtrittsöffnung 37 nicht erkennbar (siehe Fig. 3). Jedes Einfahrhorn 24d ist seitlich versetzt zur Fahrzeuglängsachse X angeordnet, so dass auch eine darin eingesetzte Stroboskopleuchte 30 in der Montageposition Pos 2.3.2 eine seitlich versetzte Position zur Fahrzeuglängsachse X aufweist.

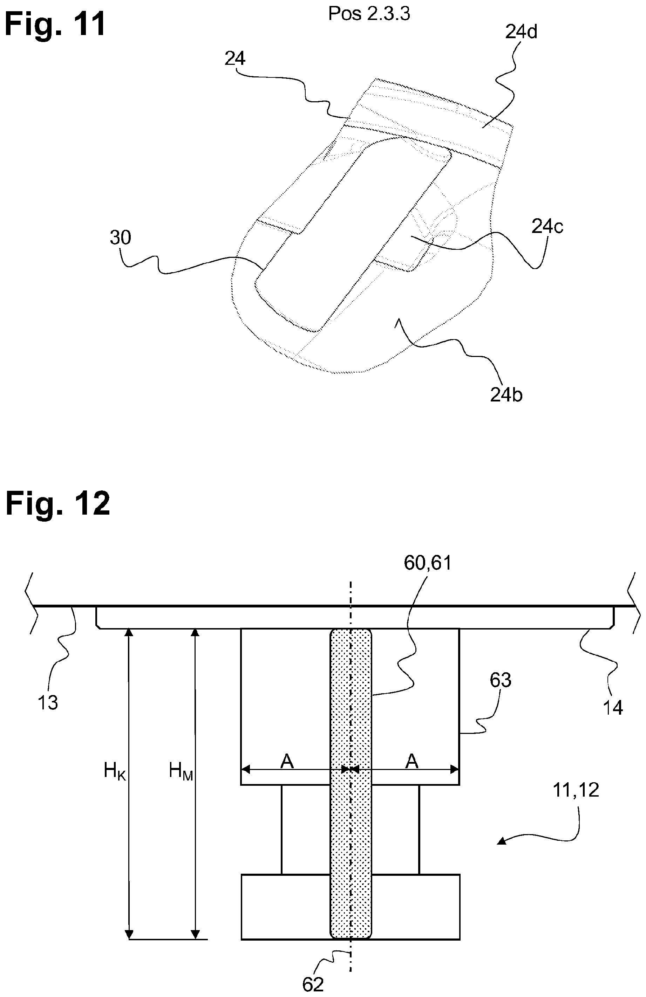

Die in Fig. 11 gezeigte Montageposition Pos 2.3.3 stimmt weitgehend mit der Pos 2.3.2 überein und unterscheidet sich lediglich dadurch, dass die Stroboskopleuchte 30 nicht in einen starren Halter 33 eingesetzt ist, sondern in eine auf der Unterseite 24b der Kupplungsplatte 24, insbesondere im Bereich der Einfahrhörner 24d, angeordnete Versteifungsrippe 24c.

Die Fig. 12 zeigt eine Vorderansicht auf einen Königszapfen 12 eines an einem Anhängerfahrzeug angeordneten Kupplungsmittels 11. Der Königszapfen 12 wird von emittiertem Licht 32 der Stroboskopleuchte 30 angeblitzt und auf dessen Oberfläche ist zeitweise entsprechend reflektiertes Licht 60 sichtbar. Das reflektierte Licht 60 ist als streifenförmige Mittenreflexionswolke 61 über die gesamte axiale Höhe H_{K} des Königszapfens 12 erkennbar.

Der Lichtempfänger 40 ist mit der in Fig. 2 beispielhaft angedeuteten elektronischen Auswerteeinheit 50 verbunden. Die elektronische Auswerteeinheit 50 identifiziert beispielsweise mittels einer darauf befindlichen Bilderkennungssoftware die gegenüber der Umgebung deutlich hellere Mittenreflexionswolke 61 und findet dadurch das Kupplungsmittel 11 des Anhängerfahrzeugs 10. Die elektronische Auswerteeinheit 50 ermittelt aus einer Höhe H_{M} der Mittenreflexionswolke 61 die Entfernung I zu dem Kupplungsmittel 11 des Anhängerfahrzeugs 10.

Es ist optional auch möglich, nach dem Auffinden des Kupplungsmittels 11, beispielsweise des Königszapfens 12, mittels der elektronischen Auswerteeinheit 50 eine Konturauswertung des vom Lichtempfänger 40 und der elektronischen Auswerteeinheit 50 bereitgestellten Bildes vorzunehmen. Die Konturauswertung umfasst bei einem Königszapfen 12 als Kupplungsmittel 11 eine Auswertung der Kantenabstände A beidseitig einer Mittellinie 62 der Mittenreflexionswolke 61 zu der erkennbaren äußeren Sichtkante 63 des Königszapfens 12 und eine Einordnung des Königszapfens 12 nach dessen Dimensionierung mit einem Durchmesser von 2,5', 3,5' oder 5'. Dieser Einordnung kann eine Plausibilitätsprüfung folgen, ob das aufgefundene Kupplungsmittel 11 geeignet ist, von der zugfahrzeugseitigen Kupplung 21 aufgenommen zu werden.

### BEZUGSZEICHENLISTE

- 10: Anhängerfahrzeug
- 11: Kupplungsmittel Anhängerfahrzeug
- 12: Königszapfen
- 13: Aufliegerplatte
- 14: Montageteller

- 20: Zugfahrzeug
- 21: zugfahrzeugseitige Kupplung
- 22: Einfahröffnung
- 23: Sattelkupplung
- 24: Kupplungsplatte
- 24a: Oberseite Kupplungsplatte
- 24b: Unterseite Kupplungsplatte
- 24c: Versteifungsrippe Kupplungsplatte
- 24d: Einfahrhörner Kupplungsplatte
- 24e: Verriegelungsbereich Kupplungsplatte
- 25: Lagerbock
- 26: Montageplatte
- 27: Verbindungssteg Einfahröffnung
- 28: Verschleißring
- 29: Verschlusshaken

- 30: Lichtgeber / Stroboskopleuchte
- 31: Schwenklager
- 32: emittiertes Licht
- 33: Halter Stroboskopleuchte
- 34: Federelement Halter
- 35: Halterbefestigung Stroboskopleuchte
- 36: Kontaktarm
- 37: Lichtdurchtrittsöffnung
- 38: optische Mittelachse Stroboskopleuchte
- 39: Befestigungsschraube Halter

- 40: Lichtempfänger
- 41: Erfassungsbereich Lichtempfänger
- 42: optische Mittelachse Lichtempfänger

- 50: elektronische Auswerteeinheit

- 60: reflektiertes Licht
- 61: Mittenreflexionswolke
- 62: Mittellinie Mittenreflexionswolke
- 63: äußere Sichtkante Königszapfen

- A: Kantenabstand Königszapfen
- H_{K}: Höhe Königszapfen
- H_{M}: Höhe Mittenreflexionswolke
- I: Entfernung Kupplungsmittel
- R: rückwärtige Richtung
- X: Fahrzeuglängsachse
- X_{K}: Einfahrrichtung Königszapfen

## Patentansprüche

1. Vorrichtung zum Orten eines an einem Anhängerfahrzeug (10)
angeordneten Kupplungsmittels (11, 12) vor dem Kupplungsvorgang,
aufweisend
eine zugfahrzeugseitige Kupplung (21), welche mit einer in rückwärtiger Richtung (R) offenen Einfahröffnung (22) zum Eintritt des Kupplungsmittels (11) ausgebildet ist,
einen an der zugfahrzeugseitigen Kupplung (21) angebrachten Lichtgeber (30) und
einen Lichtempfänger (40), welcher von dem Kupplungsmittel (11) reflektiertes Licht (60) des Lichtgebers (30) erfasst, wobei der Lichtgeber eine Stroboskopleuchte (30) ist,
wobei eine elektronische Auswerteeinheit (50) vorhanden ist, **dadurch gekennzeichnet, dass** mit der elektronischen Auswerteeinheit (50) aus einer von dem Lichtempfänger (40) empfangenen Mittenreflexionswolke (61) des reflektierten Lichtes (60), die alle reflektierenden Lichtpunkte auf der Oberfläche des Kupplungsmittels am Anhängerfahrzeug abbildet, ein Vorhandensein des Kupplungsmittels (11) sowie eine Höhe (H_{M}) der Mittenreflexionswolke (61) und aus der Höhe (H_{M}) der Mittenreflexionswolke (61) die Entfernung (I) zu dem Kupplungsmittel (11) ermittelt ist.

2. Vorrichtung nach Anspruch 1, **dadurch gekennzeichnet, dass** die Stroboskopleuchte (30) derart ausgerichtet ist, dass das emittierte Licht (32) bezüglich der zugfahrzeugseitigen Kupplung (21) in der rückwärtigen Richtung (R) abgestrahlt wird.

3. Vorrichtung nach Anspruch 1 oder 2, **dadurch gekennzeichnet, dass** die zugfahrzeugseitige Kupplung (21) eine Sattelkupplung (23) ist, wobei die Stroboskopleuchte (30) an einer Kupplungsplatte (24), einem von zwei Lagerböcken (25) oder einer Montageplatte (26) der Sattelkupplung (23) befestigt ist.

4. Vorrichtung nach Anspruch 3, **dadurch gekennzeichnet, dass** die Stroboskopleuchte (30) schwenkbeweglich an der Kupplungsplatte (24) befestigt ist.

5. Vorrichtung nach einem der Ansprüche 1 bis 4, **dadurch gekennzeichnet, dass** der Lichtempfänger (40) an der zugfahrzeugseitigen Kupplung (21) angeordnet ist.

6. Vorrichtung nach einem der Ansprüche 1 bis 5, **dadurch gekennzeichnet, dass** der Lichtempfänger (40) derart ausgerichtet ist, dass das aus der rückwärtigen Richtung (R) reflektierte Licht (60) erfasst wird.

7. Vorrichtung nach einem der Ansprüche 1 bis 6, **dadurch gekennzeichnet, dass** der Lichtempfänger (40) eine Kamera oder eine Fotozelle ist.

8. Vorrichtung nach einem der Ansprüche 1 bis 7, **dadurch gekennzeichnet, dass** die Stroboskopleuchte (30) und der Lichtempfänger (40) in eine gemeinsame Baueinheit integriert sind.

9. Vorrichtung nach Anspruch 8, **dadurch gekennzeichnet, dass** die gemeinsame Baueinheit mehrere Stroboskopleuchten (30) aufweist, die in Umfangsrichtung versetzt um den Lichtempfänger (40) angeordnet sind.

10. Vorrichtung nach einem der Ansprüche 1 bis 7, **dadurch gekennzeichnet, dass** die Stroboskopleuchte (30) und der Lichtempfänger (40) in Einbaulage auf gegenüberliegenden Seiten, symmetrisch zur Fahrzeuglängsachse (X) der zugfahrzeugseitigen Kupplung (21) angeordnet sind.

11. Vorrichtung nach einem der Ansprüche 1 bis 10, **dadurch gekennzeichnet, dass** mittels der elektronischen Auswerteeinheit (50) eine Konturauswertung beidseitig der Mittenreflexionswolke (61) und eine Verifizierung des Kupplungsmittels (11) erfolgt.

## Claims

1. A device for locating a coupling means (11, 12) arranged on a trailer vehicle (10) before the coupling operation, comprising
a coupling (21) on the towing vehicle side that is designed with an insertion opening (22) which is open in the rearward direction (R) and is intended for the entry of the coupling means (11),
a light transmitter (30) fitted to the coupling (21) on the towing vehicle side, and
a light receiver (40) which captures light (60) from the light transmitter (30) that is reflected by the coupling means (11), wherein the light transmitter is a stroboscopic light (30), wherein an electronic evaluation unit (50) is provided,
**characterized in that** with means of the electronic evaluation unit (50) from a mean reflection cloud (61) of the reflected light (60), which images all reflective points of light on the surface of the coupling means (11, 12) on the trailer vehicle (10), received by the light receiver (40), a presence of the coupling means (11) and a height (H_{M}) of the mean reflection cloud (61) and from the height (H_{M}) of the mean reflection cloud (61) a distance (1) to the coupling means (11) is determined.

2. The device according to claim 1, **characterized in that** the stroboscopic light (30) is aligned in such a way that the emitted light (32) is emitted in the rearward direction (R) with respect to the coupling (21) on the towing vehicle side.

3. The device according to claim 1 or 2, **characterized in that** the coupling (21) on the towing vehicle side is a fifth wheel coupling (23), wherein the stroboscopic light (30) is attached to a coupling plate (24), one of two bearing blocks (25) or a mounting plate (26) of the fifth wheel coupling (23).

4. The device according to claim 3, **characterized in that** the stroboscopic light (30) is pivotally attached to the coupling plate (24).

5. The device according to one of claims 1 to 4, **characterized in that** the light receiver (40) is arranged on the coupling (21) on the towing vehicle side.

6. The device according to one of claims 1 to 5, **characterized in that** the light receiver (40) is aligned in such a way that the reflected light (60) from the rearward direction (R) is captured.

7. The device according to one of claims 1 to 6, **characterized in that** the light receiver (40) is a camera or a photocell.

8. The device according to one of claims 1 to 7, **characterized in that** the stroboscopic light (30) and the light receiver (40) are integrated into a common structural unit.

9. The device according to claim 8, **characterized in that** the common structural unit comprises a plurality of stroboscopic lights (30) which are arranged offset in the circumferential direction around the light receiver (40).

10. The device according to one of claims 1 to 7, **characterized in that** the stroboscopic light (30) and the light receiver (40) are arranged in the installed position on opposite sides, symmetrically to the vehicle's longitudinal axis (X) of the coupling (21) on the towing vehicle side.

11. The device according to one of claims 1 to 10, **characterized in that** a contour evaluation on both sides of the mean reflection cloud (61) and a verification of the coupling means (11) are carried out by means of the electronic evaluation unit (50).

## Revendications

1. Dispositif de localisation d'un moyen d'attelage (11, 12) disposé sur un véhicule remorque (10) avant le processus d'attelage, comprenant
un attelage (21) côté véhicule tracteur, qui est conçu avec une ouverture d'entrée (22) ouverte vers l'arrière (R) pour l'entrée du moyen d'attelage (11),
un émetteur de lumière (30) fixé à l'attelage (21) côté véhicule tracteur et
un récepteur de lumière (40) qui détecte la lumière (60) de l'émetteur de lumière (30) réfléchie par le moyen de couplage (11), dans lequel l'émetteur de lumière est une lumière stroboscopique (30),
dans lequel une unité d'évaluation électronique (50) est prévue, **caractérisé en ce que** l'unité d'évaluation électronique (50) permet de déterminer, à partir d'un nuage de réflexion centrale (61) de la lumière réfléchie (60) reçu par le récepteur de lumière (40), lequel représente tous les points de réflexion de lumière à la surface du moyen d'attelage du véhicule remorque, la présence du moyen d'attelage (11), ainsi qu'une hauteur (H_{M}) du nuage de réflexion centrale (61), et à partir de cette hauteur (H_{M}) du nuage de réflexion centrale (61), la distance (I) jusqu'au moyen d'attelage (11).

2. Dispositif selon la revendication 1, **caractérisé en ce que** la lumière stroboscopique (30) est orientée de sorte que la lumière émise (32) est rayonnée dans la direction arrière (R) par rapport à l'attelage (21) côté véhicule tracteur.

3. Dispositif selon la revendication 1 ou 2, **caractérisé en ce que** l'attelage côté véhicule tracteur (21) est une sellette d'attelage (23), le dans lequel la lumière stroboscopique (30) est fixée à une plaque d'attelage (24), à l'un des deux blocs de palier (25) ou à une plaque de montage (26) de la sellette d'attelage (23).

4. Dispositif selon la revendication 3, **caractérisé en ce que** la lumière stroboscopique (30) est montée pivotante sur la plaque d'attelage (24).

5. Dispositif selon l'une des revendications 1 à 4, **caractérisé en ce que** le récepteur de lumière (40) est disposé sur l'attelage (21) côté véhicule tracteur.

6. Dispositif selon l'une des revendications 1 à 5, **caractérisé en ce que** le récepteur de lumière (40) est orienté de sorte que la lumière (60) réfléchie depuis l'arrière (R) soit détectée.

7. Dispositif selon l'une des revendications 1 à 6, **caractérisé en ce que** le récepteur de lumière (40) est une caméra ou une cellule photoélectrique.

8. Dispositif selon l'une des revendications 1 à 7, **caractérisé en ce que** la lumière stroboscopique (30) et le récepteur de lumière (40) sont intégrés dans une unité structurelle commune.

9. Dispositif selon la revendication 8, **caractérisé en ce que** l'unité structurelle commune comporte plusieurs lumières stroboscopiques (30) qui sont disposées de manière décalée dans la direction circonférentielle autour du récepteur de lumière (40).

10. Dispositif selon l'une quelconque des revendications 1 à 7, **caractérisé en ce que** la lumière stroboscopique (30) et le récepteur de lumière (40) sont disposés en position montée sur des côtés opposés, symétriquement à l'axe longitudinal du véhicule (X) de l'attelage côté véhicule tracteur (21).

11. Dispositif selon l'une quelconque des revendications 1 à 10, **caractérisé en ce qu'**aumoyen de l'unité d'évaluation électronique (50), une évaluation du contour des deux côtés du nuage de réflexion central (61) et une vérification du moyen de couplage (11) sont effectuées.
